# EUROPÄISCHE PATENTANMELDUNG

(11) **EP 1 103 916 A1**
(43) Veröffentlichungstag der Anmeldung: **30.05.2001**
(21) Anmeldenummer: 99123432.9
(22) Anmeldetag: 24.11.1999
(51) Int. Cl.: G06K 19/07, G07F 7/10

(54) **Chipkarte**

(71) Anmelder: Infineon Technologies AG, 81541 München (DE)
(72) Erfinder: Walter, Georg, 80639 München (DE)
(74) Vertreter: Hermann, Uwe, Dipl.-Ing.

(57) **Zusammenfassung**

Die Erfindung betrifft eine Chipkarte mit einem externen Zusatz-Schaltkreis, ein Verfahren zur Aufbringung des Zusatz-Schaltkreises auf einer Chipkarte sowie ein Verfahren zur Verwendung des Zusatz-Schaltkreises beim Betrieb der Chipkarte. Bisherige Chipkarten erfüllen nicht hinreichend den Wunsch nach Sicherheit und Flexibilität. Die Erfindung stellt daher eine verbesserte Chipkarte zur Verfügung, die aufweist eine Trägerkarte (2) mit einer Oberfläche; und einem an der Trägerkarte angeordneten (2), integrierten Schaltkreis (3) ; wobei diese Chipkarte (1) gekennzeichnet ist durch zumindest einen auf der Oberfläche der Trägerkarte (2) angeordnete Zusatz-Schaltkreis (7), der mit dem integrierten Schaltkreis (3) in elektrischer Verbindung steht und von dem integrierten Schaltkreis (3) lesbare Informationen enthält. Die lesbaren Informationen können ein Muster im Zusatz-Schaltkreis oder ein Programmcode sein. Das Muster kann dem Zusatz-Schaltkreis (7) beispielsweise während der Laserbeschriftung der Chipkarte eingebrannt werden. Der Programmcode kann in einem ROM des Zusatz-Speichers (7) gespeichert sein. Vorzugsweise wird der Zusatz-Schaltkreis (7) in Polymertechnologie mit Polymertransistoren implementiert, da diese sich einfach aufdrucken lässt.

## Beschreibung

Die Erfindung betrifft eine Chipkarte mit einem externen Zusatz-Schaltkreis, ein Verfahren zur Aufbringung des Zusatz-Schaltkreises auf einer Chipkarte sowie ein Verfahren zur Verwendung des Zusatz-Schaltkreises beim Betrieb der Chipkarte.

Sogenannte Chipkarten, wie sie heute auf dem Markt erhältlich sind, bestehen aus einem meist aus Kunststoff angefertigten Träger und einem integrierten Schaltkreis, der in den Träger eingebettet ist. Kontakte stellen die Verbindung des integrierten Schaltkreises zu Lesevorrichtungen her. Dieser bekannten Anordnung sind allerdings einige Nachteile eigen.

Die Nachteile betreffen jeweils eine mangelnde Flexibilität des integrierten Schaltkreises, mit seiner Umwelt in Verbindung zu treten. So wurde bisher in dem integrierten Schaltkreis auf der Chipkarte eine Identifikation eingetragen, welche der Zuordnung des integrierten Schaltkreises zu einer bestimmten Chipkarte dienen sollte. Der integrierte Schaltkreis kann jedoch nicht überprüfen, ob er sich noch in seinem vorgesehenen Plastikkartenkörper, dem Träger, befindet. Hierdurch ist es möglich, Chipkarten zu fälschen, indem der integrierte Schaltkreis in einen Träger eingesetzt wird, der eine andere Beschriftung, beispielsweise Personenidentifikationsbeschriftungen, oder einen anderen Magnetstreifen aufweist. Somit ist die Fälschungssicherheit heutiger Chipkarten mangelhaft, weil sie nicht nach außen in Verbindung mit dem Träger treten können.

Anwendungsprogramme und Daten werden bei vorbekannten Chipkarten, beziehungsweise sogenannten Multimediakarten, im integrierten Schaltkreis der Karte, respektive in auf dem integrierten Schaltkreis vorgesehenen Speicherbereichen, abgelegt. Die Speicherung erfolgt dabei üblicherweise im ROM-Speicher der Karte. Dieser Speicher wird allerdings sehr kostenaufwendig und im Produktionsprozeß früh hergestellt, und es besteht keine Möglichkeit zur nachträglichen Änderung des Speicherinhalts.

Eine eingeschlagene Alternative ist die Abspeicherung von Programmen, beziehungsweise Daten, in einem dem integrierten Schaltkreis eigenen, nicht flüchtigen, jedoch frei programmierbaren Speicher, heutzutage üblicherweise einem EEPROM. Dies ist der einzig vorbekannte Weg, nach der Herstellung der eigentlichen Chipkarte eine Programmierung, beziehungsweise Dateneinbringung, in die Chipkarte zu ermöglichen. Da diese Speichertechnik aber auf Grund des speziellen Herstellungsprozesses und des großen Flächenbedarfs des EEPROMs sehr kostenintensiv ist, werden die Gesamtkosten von Chipkarten in nachteiliger Weise erhöht.

Es ist daher die Aufgabe der vorliegenden Erfindung, die oben beschriebenen benötigten Informationen von außerhalb des integrierten Schaltkreises bereitzustellen.

Diese Aufgabe löst die vorliegende Erfindung durch die Bereitstellung einer Chipkarte gemäß dem unabhängigen Patentanspruch 1, einem Verfahren zur Herstellung einer Chipkarte gemäß dem unabhängigen Patentanspruch 18 sowie einem Verfahren zum Betrieb eines integrierten Schaltkreises auf einer Chipkarte gemäß dem unabhängigen Patentanspruch 25. Weitere vorteilhafte Ausgestaltungen, Aspekte und Details der Erfindung ergeben sich aus den abhängigen Patentansprüchen, der Beschreibung und den beigefügten Zeichnungen.

Das Grundprinzip der vorliegenden Erfindung besteht darin, einen externen Zusatz-Schaltkreis nach der Herstellung der eigentlichen Chipkarte auf dieser anzubringen, der in Verbindung mit dem integrierten Schaltkreis steht und der die benötigten Informationen bereitstellen kann. Der Zusatz-Schaltkreis kann so gewählt sein, daß er sich in einfacher Weise anbringen läßt und kostengünstig zu realisieren ist.

Demzufolge ist die Erfindung gerichtet auf eine Chipkarte die aufweist eine Trägerkarte mit einer Oberfläche und einen an der Trägerkarte angeordneten integrierten Schaltkreis, und die gekennzeichnet ist durch zumindest einen auf der Oberfläche der Trägerkarte angeordneten Zusatz-Schaltkreis, der mit dem integrierten Schaltkreis in elektrischer Verbindung steht und von dem integrierten Schaltkreis lesbare Informationen enthält.

Für die Ausgestaltung des Zusatz-Schaltkreises stehen verschiedene Optionen zur Verfügung. So kann er als eine Schicht aus elektrischen Bauelementen ausgebildet sein, beispielsweise aus Polymerbauelementen. Der Einsatz einer solchen Polymertechnologie für die Ausführung der Erfindung wird besonders bevorzugt.

Die relativ neue Polymertechnologie ermöglicht es, elektrische Bauelemente wie beispielsweise Transistoren, Widerstände etc. statt aus den klassischerweise verwendeten Materialien, beispielsweise bei integrierten Schaltkreisen Halbleitermaterialien, aus Polymeren aufzubauen, welche eine charakteristische elektrische Leitfähigkeit und durch ihre spezielle Anordnung Verschaltungsmöglichkeiten haben. Um Logikschaltungen entsprechend realisieren zu können, wird es bevorzugt, daß die Polymerbauelemente insbesondere Polymertransistoren beinhalten. Aus Transistoren lassen sich beliebige Logikschaltungen zusammensetzen, insbesondere auch Daten-Speicher.

Der Zusatz-Schaltkreis kann jedoch auch Metallelemente aufweisen, welche anstelle der Polymerelemente oder zusätzlich zu diesen verwendet werden. Metallelemente im Sinne der vorliegenden Erfindung können dabei Metallleiterbahnen oder Bauelementen aus leitfähigen Metallen oder Halbleitern sein Vorzugsweise hat der Zusatz-Schaltkreis außer der Kernfunktionalität, welche die Informationen repräsentiert, eine Ausleseschaltung zur Ansteuerung der verwendeten Bauelemente. Auch diese Ausleseschaltung besteht ihrerseits aus Bauelementen, beispielsweise aus Polymerbauelementen, und ist in der Lage, andere Bauelemente auf dem Zusatz-Schaltkreis elektrisch so anzusprechen, daß über ihren Zustand, beziehungsweise in ihnen gespeicherte Informationen, Auskunft erhalten werden kann.

Ein besonderer Vorteil der vorliegenden Erfindung ist die einfache Anbringbarkeit dieses Zusatz-Schaltkreises auf der Trägerkarte. Der Zusatz-Schaltkreis kann insbesondere bei Verwendung von Polymerbauelementen einfach aufgedruckt werden, das heißt, daß die zur Herstellung der Polymerbauelemente notwendigen Strukturen in einem gegebenenfalls Mehrschichtverfahren auf die Trägerkarte aufgedruckt werden, um dort die Polymer- oder sonstige Bauelementstrukturen zu bilden.

Die in der Erfindung zum Einsatz kommende Trägerkarte kann jede im Stand der Technik bekannte für Chipkarten verwendete Untergrundkarte sein, beispielsweise eine Kunststoffkarte aus dafür gebräuchlichen Kunststoffen.

Der Zusatz-Schaltkreis kann als eine einfache Erweiterung der im integrierten Schaltkreis enthaltenen Schaltung angesehen werden. Es ist jedoch gleichermaßen möglich, eine definierte Schnittstelle zwischen den integrierten Schaltkreis und den Zusatz-Schaltkreis anzuordnen. Auf diese Weise ist es beispielsweise möglich, die Zahl der notwendigen Signalleitungen zu verringern oder durch standardisierte Schnittstellen eine Austauschbarkeit von integrierten Schaltkreisen und Zusatz-Schaltkreisen zu erreichen

Ein wichtiges Einsatzgebiet der erfindungsgemäßen Chipkarte besteht in der Möglichkeit, eine identifikatorische Verknüpfung zwischen einem bestimmten integrierten Schaltkreis und der ihm zugehörigen Trägerkarte vorzunehmen. Dies wird dadurch ermöglicht, daß der erfindungsgemäße Zusatz-Schaltkreis sich auf der Trägerkarte und nicht auf dem integrierten Schaltkreis befindet. Es ist dadurch möglich, den Zusatz-Schaltkreis so auszulegen, daß die darauf enthaltenen Informationen zumindest ein Identifikationsmuster repräsentieren. Dieses dient der eindeutigen Kennzeichnung einer bestimmten Trägerkarte.

Die Informationen können dadurch individualisiert werden, daß jeder auf einer Trägerkarte angebrachte Zusatz-Schaltkreis eine individuelle Anordnung der Bauelemente enthält, beziehungsweise bei Verwendung von Speicherzellen als Bauelemente der Inhalt der Speicherzellen sich unterscheidet. Ein solches Verfahren des Anbringens eines erfindungsgemäßen Zusatz-Schaltkreises ist jedoch sehr aufwendig, da für jede Trägerkarte der Druck oder die sonstige Anbringungstechnik des Zusatz-Schaltkreises neu gestaltet werden muß.

Daher schlägt die Erfindung vorzugsweise einen alternativen Weg ein, bei dem der Zusatz-Schaltkreis aufweist: eine Anordnung von Bauelementen, von denen ein Teil nach einem vorbestimmten Muster modifiziert ist, wobei der integrierte Schaltkreis das vorbestimmte Muster identifizieren kann und wobei über das Muster der modifizierten und unveränderten Bauelemente die Information repräsentieren.

Unter einer Modifikation eines Bauelementes ist zu verstehen, daß dieses nach seiner Anbringung auf der Trägerkarte einer Veränderung unterworfen ist, welche seine Funktion verändert oder aufhebt. Eine Modifikation kann beispielsweise in einer Zerstörung von Bauelementen bestehen. Diese Vorgehensweise hat den Vorteil, daß der Zusatz-Schaltkreis bei jeder damit bestückten Trägerkarte zunächst während der Herstellung gleich sein kann und dann in einem weiteren Herstellungsschritt individualisiert wird, um eine eindeutige Kennzeichnung einer bestimmten Trägerkarte zu ermöglichen.

Hierbei ist es notwendig, daß der auf der Trägerkarte angeordnete integrierte Schaltkreis das sich ergebende Muster der modifizierten und unmodifizierten Bauelemente registrieren und wiedererkennen kann, um somit feststellen zu können, ob der integrierte Schaltkreis gegebenenfalls in eine andere Trägerkarte eingesetzt worden ist, die eine von der ursprünglichen Trägerkarte abweichende Modifikation innerhalb der Anordnung der Bauelemente aufweist. Auf diese Weise läßt sich also die gewünschte Verknüpfung eines integrierten Schaltkreises mit seiner zugehörigen Trägerkarte erreichen.

Um eine flexiblere Programmierbarkeit eines integrierten Schaltkreises zu erreichen, kann es des weiteren bevorzugt sein, daß die im Zusatz-Schaltkreis enthaltenen Informationen einen Programmcode oder sonstige Daten repräsentieren, welche vom integrierten Schaltkreis abgearbeitet werden können.

Dementsprechend sollte der Zusatz-Schaltkreis dann zumindest in einem seiner Teile Speicherzellen aufweisen, die zur Aufnahme von Daten oder Programmcode geeignet sind.

Da der Zusatz-Schaltkreis bevorzugterweise aus Polymerbauelementen besteht, beziehungsweise diese enthält, wird es bevorzugt, daß der Zusatz-Schaltkreis ein Zellenfeld aus Polymertransistoren aufweist. Dieses Zellenfeld kann unterschiedliche Funktionen haben. Es kann beispielsweise der Identifikation dienen, indem bestimmte Zellen des Feldes einer Modifikation unterworfen sind, beziehungsweise es kann Daten aufnehmen, indem die Polymertransistoren als Speicherzellen ausgeführt sind, welche einen Programmcode und/oder sonstige Daten enthalten.

Dementsprechend wird bevorzugt, daß der Zusatz-Schaltkreis einen Datenspeicher aufweist, der beispielsweise aus diesem Zellenfeld aus Polymertransistoren oder auf eine andere Weise gebildet werden kann. Die Verbindung des Zusatz-Schaltkreises mit dem integrierten Schaltkreis kann auf verschiedene Weisen erfolgen. So können beispielsweise bei Verwendung von Speicherzellen jeweils einzelne Datenleitungen, beispielsweise als Leiterbahnen, zu den Speicherzellen geführt werden, um ein individuelles Auslesen der Speicherzellen zu ermöglichen. Um die Anbindung des Zusatz-Schaltkreises an den integrierten Schaltkreis zu vereinfachen und die Anforderungen an die Positioniergenauigkeit bei der Aufbringung des Zusatz-Schaltkreises auf die Trägerkarte möglichst gering zu halten, wird es jedoch bevorzugt, eine möglichst einfache Verbindung zwischen den beiden Elementen der Erfindung herzustellen. Beispielsweise kann eine solche Verbindung eine serielle Verbindung zwischen Zusatz-Schaltkreis und integriertem Schaltkreis sein. In diesem Fall ist es notwendig, mittels einer Ausleseschaltung im Zusatz-Schaltkreis die im Zusatz-Schaltkreis enthaltenen Informationen auszulesen und in einer seriellen Form über die serielle Verbindung dem integrierten Schaltkreis zuzuführen.

Die Erfindung ist weiterhin gerichtet auf ein Verfahren zur Herstellung einer Chipkarte mit folgenden Schritten:
- Bereitstellen einer Trägerkarte mit einem an der Karte angeordneten integrierten Schaltkreis;
- Aufbringen zumindest eines Zusatz-Schaltkreises auf der Oberfläche der Karte, so daß der Zusatz-Schaltkreis mit dem integrierten Schaltkreis in elektrischer Verbindung steht, wobei dem Schaltkreis Informationen eingeprägt sind oder werden, die von dem integrierten Schaltkreis lesbar sind.

Die Informationen können dabei bereits beim Aufbringen hergestellt sein oder auch durch nachträgliche Modifikationen ihre entgültige Realisierung erfahren.

Vorzugsweise weist der Zusatz-Schaltkreis Polymerbauelemente auf, beispielsweise Polymertransistoren. Dementsprechend wird es des weiteren bevorzugt, daß das Aufbringen des Zusatz-Schaltkreises durch Bedrucken erfolgt, wie es bei der Herstellung von Polymerbauelementen üblich ist. Es sind jedoch auch andere Arten von Bauelementen inklusive einfacher Metalldrähte und andere Aufbringverfahren, beispielsweise das Bedampfen, vorstellbar.

Um eine eindeutige Kennzeichnung, respektive Identifikation, einer Trägerkarte durch den zugehörigen integrierten Schaltkreis zu ermöglichen, kann das Verfahren die weiteren Schritte aufweisen:
- Modifizieren vorbestimmter Bereiche des Zusatz-Schaltkreises und
- Identifizieren des sich durch die Modifizierung ergebenden elektrischen Musters des Zusatz-Schaltkreises durch den integrierten Schaltkreis.

Auf diese Weise kann eine Individualisierung des Zusatz-Schaltkreises auf der Trägerkarte erreicht werden. Das hier genannte elektrische Muster ergibt sich durch Auslesen, beziehungsweise Abfragen, der verschiedenen den Zusatz-Schaltkreis bildenden Bauelemente.

Vorzugsweise erfolgt die Modifizierung durch eine Zerstörung der vorbestimmten Bereiche.

Auf Chipkarten wird zumeist eine im Klartext lesbare Information angebracht, welche die Chipkarte beispielsweise mit einem bestimmten Inhaber oder einer bestimmten Funktion verbinden soll. Die Anbringung einer solchen Personalisierungsinformation kann beispielsweise durch Einstanzen erfolgen, wird heutzutage jedoch vorzugsweise durch eine Laserbeschriftung vorgenommen.

In einer besonders bevorzugten Ausführungsform der vorliegenden Erfindung wird dieser Personalisierungsvorgang der Chipkarte zugleich verwendet, um die vorbestimmten Bereiche des Zusatz-Schaltkreises zu modifizieren. Somit kann also das Modifizieren der vorbestimmten Bereiche beim Anbringen einer Personalisierungsinformation in die Oberfläche der Trägerkarte erfolgen. Der Zusatz-Schaltkreis muß dementsprechend so auf der Trägerkarte positioniert werden, daß bei der Anbringung der Personalisierungsinformation auf der Trägerkarte eine Modifikation zumindest eines Teils der Bauelemente des Zusatz-Schaltkreises erfolgen kann. Bei der üblichen Laserbeschriftung wird die Modifikation in einer Zerstörung bestimmter Bauelemente liegen.

Das Einprägen der Informationen kann auch durch die Anordnung von Bauelementen des Zusatz-Schaltkreises erfolgen. Dies wird besonders bevorzugt zum Einsatz gelangen, wenn im Zusatz-Schaltkreis Programmcode und/oder sonstige Daten abgelegt werden sollen. Dieser Programmcode beziehungsweise diese Daten entsprechen in ihren Binärwerten bestimmten Ausführungen von Bauelementen, beispielsweise Speicherzellen. Die Speicherzellen können so angeordnet werden, daß sie bestimmte binäre Informationen enthalten, die der integrierte Schaltkreis auslesen kann, um beispielsweise den Programmcode abzuarbeiten beziehungsweise die Daten für interne Prozessierungen zu verwenden.

Schließlich ist die Erfindung auch gerichtet auf ein Verfahren zum Betrieb eines integrierten Schaltkreises auf einer erfindungsgemäßen Chipkarte mit folgenden Schritten:
- Auslesen zumindest eines Teils einer in den zumindest einen Zusatz-Schaltkreis repräsentierten Information; und
- Verwenden der ausgelesenen Informationen.

Die Verwendung der ausgelesenen Informationen kann beispielsweise in einer Erkennung eines im Zusatz-Schaltkreis wiedergegebenen Identifikationsmusters der Chipkarte liegen. Das Verwenden kann auch in einer Abarbeitung eines Programmcodes, welcher in dem Zusatz-Schaltkreis gespeichert ist, bestehen.

Die vorliegende Erfindung integriert die Nutzung zweier verschiedener Technologien, die für jeweils unterschiedliche Zwecke optimiert sind und sich so in einem Produkt ergänzen. Die herkömmliche Siliziumtechnologie, welche für den integrierten Schaltkreis zur Anwendung kommt, erfüllt Anforderungen an eine hohe Geschwindigkeit und einen geringen Stromverbrauch. Die Polymertechnologie andererseits zeichnet sich durch geringe Herstellungskosten und weniger Beschränkungen hinsichtlich des Platzbedarfs aus. Gemeinsam erhöhen sie die Flexibilität und Einsetzbarkeit von erfindungsgemäß hergestellten Chipkarten.

Im folgenden soll die Erfindung an Hand zweier Ausführungsbeispiele erläutert werden, wobei auf die beigefügten Zeichnungen Bezug genommen werden soll, in denen folgendes dargestellt ist:
Figur 1 zeigt eine erste Ausführungsform der vorliegenden Erfindung, bei der ein Zellenfeld des Zusatz-Schaltkreises zur Identifikation der Chipkarte dient;
Figur 2 zeigt eine weitere Ausführungsform einer Chipkarte gemäß der vorliegenden Erfindung, bei der der Zusatz-Schaltkreis ein Speicherzellenfeld enthält.

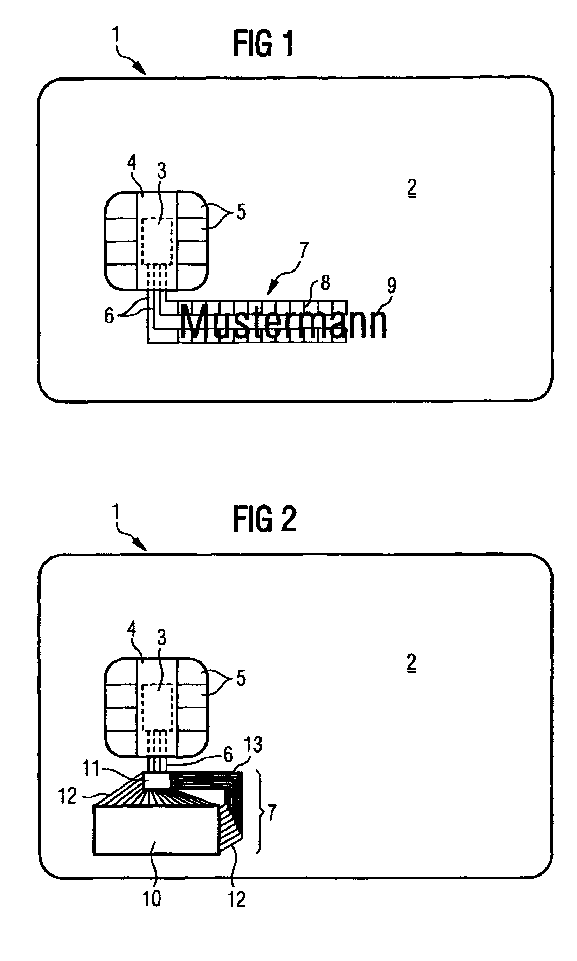

Figur 1 zeigt eine erste Ausführungsform einer erfindungsgemäßen Chipkarte 1, die aus einer Trägerkarte 2 und einem integrierten Schaltkreis 3 besteht. Zum Schutz des integrierten Schaltkreises 3 ist üblicherweise eine Abdeckung 4 vorgesehen, die zugleich Kontakte 5 enthält, welche eine Kontaktierung des integrierten Schaltkreises mit der Umwelt, beispielsweise einem Lesegerät, ermöglichen. Da die Chipkarte durch Laserbeschriftung personalisiert wird, kann ein Feld aus Polymertransistoren durch den dabei verwendeten Laser mitpersonalisiert werden, um einen erfindungsgemäßen Zusatz-Schaltkreis herzustellen.

Unterhalb des Beschriftungsfeldes wird ein in Fig. 1 stark schematisierter Zusatz-Schaltkreis 7 in Form eines Zellenfeldes aufgebracht. Dieses weist Bauelemente, beispielsweise Polymerbauelemente 8, die hier schematisch dargestellt sind, auf und ist über eine geeignete Anzahl von Leiterbahnen 6 mit dem integrierten Schaltkreis 3 verbunden. Durch die Beschriftung mittels Laser oder in einer anderen geeigneten Weise werden Bestandteile des Zellenfeldes des Zusatz-Schaltkreises 7 zerstört. Das Muster der Zerstörung kann ausgewertet werden, beispielsweise durch den integrierten Schaltkreis 3. Das Zellenfeld sollte dabei so ausgelegt werden, daß die Personalisierung tatsächlich für jede Trägerkarte auch zu einem Muster im Zellenfeld führt, das sich von allen anderen Mustern in anderen Chipkarten unterscheidet.

Die Auswertung kann durch eine Ansteuerlogik erfolgen, welche die zerstörten Strukturen feststellen kann, wobei die Ansteuerlogik die Informationen an den integrierten Schaltkreis 3 weitergibt.

Der Vorteil dieses Verfahrens ist die Nutzung bereits vorhandener Verarbeitungsschritte. Zum einen werden Chipkarten bereits üblicherweise durch einen Laser beschriftet, so daß das Muster der Beschriftung lediglich noch in ein auswertbares Muster von zerstörten Zellen des Zusatz-Schaltkreises gewandelt werden muß. Die Polymertechnologie läßt sich bequem und kostengünstig auf der Trägerkarte aufbringen, da dies ähnlich zu üblichen Druckverfahren abläuft, welche beispielsweise auch bei der sonstigen Bedruckung der Trägerkarte Verwendung finden können, bei denen ein graphisches Layout der Chipkarte erzeugt wird.

Versuche, den integrierten Schaltkreis 3 aus der Trägerkarte 2 herauszulösen und beispielsweise in einer fremden Umgebung zu betreiben, werden von dem integrierten Schaltkreis 3 erkannt, da die Verbindung zum auf der Trägerkarte angeordneten, zugehörigen Zusatz-Schaltkreis 7 unterbrochen ist. Der integrierte Schaltkreis kann dann so ausgelegt, beziehungsweise programmiert, werden, daß er seine normale Funktionalität einstellt oder beispielsweise auf ihm enthaltene Informationen löscht. Die Sicherheit einer entsprechend hergestellten Chipkarte wird so wesentlich erhöht.

Figur 2 zeigt eine weitere Ausführungsform der erfindungsgemäßen Chipkarte 1, bei der eine Trägerkarte 2 mit einem integrierten Schaltkreis 3 verbunden ist. Gleiche Bezugszeichen kennzeichnen hierbei gleiche Elemente wie in Figur 1. Dieses Ausführungsbeispiel stellt Programmcode und/oder Daten dem integrierten Schaltkreis durch Anbringung eines externen Zusatz-Schaltkreises zur Verfügung. Der Zusatz-Schaltkreis 7 umfaßt hierbei ein ROM-Zellenfeld 10, das auf der Trägerkarte 2 aufgebracht wird. Zur Ansteuerung der einzelnen aus Polymertransistoren bestehenden Speicherzellen des ROM-Zellenfeldes 10 dienen Leiterbahnen 12, welche entweder unmittelbar oder über eine Leiterbahnbus 13 einer Ausleseschaltung 11 zugeführt werden. Die Ansteuerung des ROM-Polymerspeichers 10 ist dabei seriell ausgeführt, um die Anzahl der externen Steuer- und Datenleitungen 6 gering zu halten. Da gerade bei aufgedruckten Polymertransistoren eine externe Analyse des binären Zelleninhalts leichter möglich ist, kann es bevorzugt sein, die Daten im ROM-Zellenfeld 10 verschlüsselt abzulegen. In diesem Fall muß der integrierte Schaltkreis über Dechiffrierungsmöglichkeiten verfügen, um die Daten, beziehungsweise den Programmcode, korrekt interpretieren zu können. Den hohen Sicherheitsanforderungen im Chipkartenbereich kann so Rechnung getragen werden.

Ebenso ist es möglich, Funktionen zur Fehlerkorrektur zu implementieren, um so die Zuverlässigkeit der gesamten Chipkarte zu erhöhen. Die Bedruckung der Trägerkarte 2 mit einem Zusatz-Schaltkreis aus Polymerbauelementen ermöglicht wesentlich kurzfristigere Reaktionen auf Programmbeziehungsweise Datenänderungen, als dies bei der Konzipierung konventioneller integrierter Schaltkreise möglich ist. Die Speicherbelegung des Zellenfeldes 10 erfolgt im Grunde genommen erst im Moment der eigentlichen Kartenherstellung, nämlich während der Bedruckung. Somit ist eine maximale Flexibilität der Programmierung des integrierten Schaltkreises gewährleistet.

Um eine Einbindung des Zusatz-Schaltkreises 7 in die Funktionalitäten des integrierten Schaltkreises 3 zu erreichen, wird im Betriebssystem des integrierten Schaltkreises eine Funktion vorgesehen, welche das externe Zellenfeld 10 wie ein internes ROM benutzbar macht.

Die Nutzung von Polymertechnologien zur Personalisierung von Chipkarten, beziehungsweise zur Programmierung von Chipkarten, ist vollkommen neu. Die Kosten des Verfahrens können niedrig gehalten werden, da bereits vorhandene Arbeitsschritte ausgenutzt werden können oder zusätzliche bei der Herstellung notwendige Schritte den bereits vorhandenen ähneln. Bei der Bereitstellung von Programmcode im Zusatz-Schaltkreis wird der Zeitpunkt der Programmierung durch die Nutzung der Polymertechnologie oder einer vergleichbaren Technologie wesentlich nach hinten verlagert. Die Kosten einer Programmierung werden gesenkt, da ein bereits vorhandener Arbeitsschritt das Bedrucken der Chipkarte genutzt wird. Schließlich behält der eigentliche Chipkartenhersteller die Kontrolle über die Entwicklung und Geheimhaltung der Programmierung eines integrierten Schaltkreises, da er diese Informationen nicht mit dem Hersteller des integrierten Schaltkreises teilen muß.

## Patentansprüche

1. Chipkarte (1), aufweisend
eine Trägerkarte (2) mit einer Oberfläche; und
einem an der Trägerkarte angeordneten (2), integrierten Schaltkreis (3);
gekennzeichnet durch zumindest einen auf der Oberfläche der Trägerkarte (2) angeordnete Zusatz-Schaltkreis (7), der mit dem integrierten Schaltkreis (3) in elektrischer Verbindung steht und von dem integrierten Schaltkreis (3) lesbare Informationen enthält.

2. Chipkarte (1) nach Anspruch 1, dadurch gekennzeichnet, daß der Zusatz-Schaltkreis (7) als Schicht aus Baueelementen ausgebildet ist.

3. Chipkarte (1) nach Anspruch 1 oder 2, dadurch gekennzeichnet, daß der Zusatz-Schaltkreis (7) Polymerbauelemente aufweist.

4. Chipkarte (1) nach Anspruch 3, dadurch gekennzeichnet, daß die Polymerbauelemente Polymertransistoren beinhalten.

5. Chipkarte (1) nach einem der Ansprüche 1 bis 4, dadurch gekennzeichnet, daß der Zusatz-Schaltkreis (7) Metallelemente aufweist.

6. Chipkarte (1) nach einem der Ansprüche 1 bis 5, dadurch gekennzeichnet, daß der Zusatz-Schaltkreis (7) eine Ausleseschaltung zur Ansteuerung der Bauelemente aufweist.

7. Chipkarte (1) nach einem der Ansprüche 1 bis 6, dadurch gekennzeichnet, daß der Zusatz-Schaltkreis (7) aufgedruckt ist.

8. Chipkarte (1) nach einem der Ansprüche 1 bis 7, dadurch gekennzeichnet, daß die Trägerkarte (2) eine Kunststoffkarte ist.

9. Chipkarte (1) nach einem der Ansprüche 1 bis 8, dadurch gekennzeichnet, daß der Zusatz-Schaltkreis (7) mit einem Ansteuerungsmittel im integrierten Schaltkreis in Verbindung steht.

10. Chipkarte (1) nach einem der Ansprüche 1 bis 9, dadurch gekennzeichnet, daß die Informationen zumindest ein Identifikations-Muster repräsentieren.

11. Chipkarte (1) nach Anspruch 10, dadurch gekennzeichnet, daß der Zusatz-Schaltkreis (7) aufweist eine Anordnung von Bauelementen (8), von denen ein Teil nach einem vorbestimmten Muster modifiziert ist, wobei der integrierte Schaltkreis (3) das vorbestimmte Muster identifizieren kann und wobei das Muster der modifizierten und unveränderten Bauelemente (8) die Information repräsentieren.

12. Chipkarte (1) nach Anspruch 11, dadurch gekennzeichnet, daß die Modifikation in einer Zerstörung von Bauelementen (8) besteht.

13. Chipkarte (1) nach einem der Ansprüche 1 bis 9, dadurch gekennzeichnet, daß die Informationen Programmcode oder sonstige Daten repräsentieren.

14. Chipkarte (1) nach einem der Ansprüche 1 bis 13, dadurch gekennzeichnet, daß der Zusatz-Schaltkreis (7) Speicherzellen (10) aufweist.

15. Chipkarte (1) nach einem der Ansprüche 1 bis 14, dadurch gekennzeichnet, daß der Zusatz-Schaltkreis (7) ein Zellenfeld aus Polymertransistoren aufweist.

16. Chipkarte (1) nach einem der Ansprüche 1 bis 15, dadurch gekennzeichnet, daß der Zusatz-Schaltkreis (7) einen Daten-Speicher aufweist.

17. Chipkarte (1) nach einem der Ansprüche 1 bis 16, dadurch gekennzeichnet, daß die Verbindung von Zusatz-Schaltkreis (7) und integriertem Schaltkreis (3) eine serielle Verbindung ist.

18. Verfahren zur Herstellung einer Chipkarte (1) mit folgenden Schritten:
- Bereitstellen einer Trägerkarte (1) mit einem an der Trägerkarte (2) angeordneten integrierten Schaltkreis (3);
- Aufbringen zumindest eines Zusatz-Schaltkreises (7) auf der Oberfläche der Karte, so daß der Zusatz-Schaltkreis (7) mit dem integrierten Schaltkreis (3) in elektrischer Verbindung steht;
wobei dem Zusatz-Schaltkreis (7) Informationen eingeprägt sind oder werden, die von dem integrierten Schaltkreis (3) lesbar sind.

19. Verfahren nach Anspruch 18, dadurch gekennzeichnet, daß der Zusatz-Schaltkreis (7) Polymer-Bauelemente aufweist.

20. Verfahren nach Anspruch 19, dadurch gekennzeichnet, daß das Aufbringen durch Bedrucken erfolgt.

21. Verfahren nach einem der Ansprüche 18 bis 20, dadurch gekennzeichnet, daß es die weiteren Schritte aufweist:
- Modifizieren vorbestimmter Bereiche des Zusatz-Schaltkreises (7); und
- Identifizieren des sich durch die Modifizierung ergebenden elektrischen Musters des Zusatz-Schaltkreises (7) durch den integrierten Schaltkreis (3).

22. Verfahren nach Anspruch 21, dadurch gekennzeichnet, daß die Modifizierung in einer Zerstörung der vorbestimmten Bereiche besteht.

23. Verfahren nach Anspruch 20 oder 21, dadurch gekennzeichnet, daß das Modifizieren der vorbestimmten Bereiche beim Anbringen einer Personalisierungsinformation in die Oberfläche der Trägerkarte erfolgt.

24. Verfahren nach einem der Ansprüche 18 bis 20, dadurch gekennzeichnet, daß das Einprägen der Informationen durch die Anordnung von Bauelementen des Zusatz-Schaltkreises (7) erfolgt.

25. Verfahren zum Betrieb eines integrierten Schaltkreises auf einer Chipkarte (1) nach einem der Ansprüche 1 bis 17 mit folgenden Schritten:
- Auslesen zumindest eines Teils einer in dem zumindest einen Zusatz-Schaltkreis (7) repräsentierten Information; und
- Verwenden der ausgelesenen Information.

26. Verfahren nach Anspruch 25, dadurch gekennzeichnet, daß das Verwenden die Erkennung eines Identifikationsmusters in dem Zusatz-Schaltkreis (7) ist

27. Verfahren nach Anspruch 25 oder 26, dadurch gekennzeichnet, daß das Verwenden die Abarbeitung eines Programmcodes in dem Zusatz-Schaltkreis (7) ist.
